# EUROPEAN PATENT APPLICATION

(11) **EP 1 630 987 A1**
(43) Date of publication of application: **01.03.2006**
(21) Application number: 04300559.4
(22) Date of filing: 27.08.2004
(51) Int. Cl.: H04B 17/00, H04M 3/26

(54) **Media Platform Testing**

(71) Applicant: Hewlett-Packard Development Company, L.P., Houston, TX 77070 (US)
(72) Inventor: Defelice, Robert, 03110, Bedford (US); Faria, Richard, 03038, Derry (US); Fauchery, Henri, 38400, St Martin d'Heres (FR); Griswold, Shawn, 03244, Hillsboro (US)
(74) Representative: Lloyd, Richard Graham

(57) **Abstract**

Methods, systems, and devices are provided for media platform testing. A method includes multiplexing media channels of a tester having a first type media card to media channels of a media platform having a media card of a different type. The method further includes performing a media platform test routine between the tester and the media platform.

## Description

Media platforms as used in the telecommunications industry include hardware components, such as trunk lines, switches, routers, servers, and databases. Media platforms can also include software, application modules, firmware, and other computer executable instructions operable thereon. Modem media platforms are becoming more and more functional, or intelligent, in terms of the services they can provide in cooperation with the software tools that are provided thereon.

Media platforms are tested to ensure proper functionality performance, and reliability. Legacy media platform testers generally do not couple to newer media platforms having different functionality and/or operating systems. That is, in the field of software programming, programs are generally created for use on a particular operating system. Thus, a program created for use with a UNIX based operating system will likely not be capable of executing on or coupling with another operating system such as Linux.

New media platform types, e.g., Linux based media platforms with associated voice circuit based media channels, continue to emerge in the marketplace. The confluence of new media platforms and legacy hardware, e.g., UNIX operating system based testers presents certain dilemmas. For example, high end UNIX testers having DS3 bandwidth media channels have traditionally been used to couple directly to UNIX based media platforms also having DS3 bandwidth media channels. However, newer Linux based media platforms having T1, E1, or J1 bandwidth media channels are becoming more prevalent in the marketplace.

Because DS3 media channels have a different rate and framing format from either T1, E1, or J1 media channels, a DS3 type tester cannot couple its media channels directly to a media platform having T1, E1, or J1 media channels. Media platforms having Linux based operating systems and having T1, E1, and/or J1 type media channels are considered in the telecommunications industry to be more of an entry level, lower cost media platform than are media platforms which contain DS3 type media channels. These Linux based media platforms are becoming more prevalent for a variety of telecommunication marketplace uses, e.g., for mid-size to smaller businesses and for companies which would rather purchase this size of media platform for telecommunication software development applications.

In the telecommunications market, high end hardware such as testers can be costly to construct and configure. In these environments, purchasing or developing new testers to couple with newer media platform configurations, such as the Linux platform described above, may not be an economically viable option.

### Brief Description of the Drawings

Figure 1A is a block diagram embodiment of a media platform tester coupled to a standalone media platform.
Figure 1B illustrates a block diagram embodiment of multiple media platform testers coupled to a multiple media platform configuration.
Figure 1C illustrates a block diagram of another embodiment of multiple media platform testers coupled to multiple media platforms.
Figure 2 is a block diagram illustrating a method embodiment for testing a media platform.
Figure 3 is a block diagram illustrating another method embodiment for testing a media platform.
Figure 4 is a block diagram illustrating another method embodiment for testing a media platform.
Figure 5 is a block diagram embodiment of a telecommunications network including a media platform according to embodiments described herein.

### Detailed Description

Embodiments of the present invention provide programs and techniques to couple a media platform tester having a first type of operating system, e.g., a UNIX based tester, and having a first type of media channel bandwidth to a media platform having a second, different type of operating system, e.g., a Linux operating system based media platform, having a second type of media channel bandwidth. The programs include control scripts and validation scripts that are provided to both the tester and the media platform for performing a test routine on the media platform. In this manner, hardware including UNIX operating system based testers with particular voice channel capacity and data framing can couple to and perform testing routines on media platforms having different operating systems and voice channel capacity.

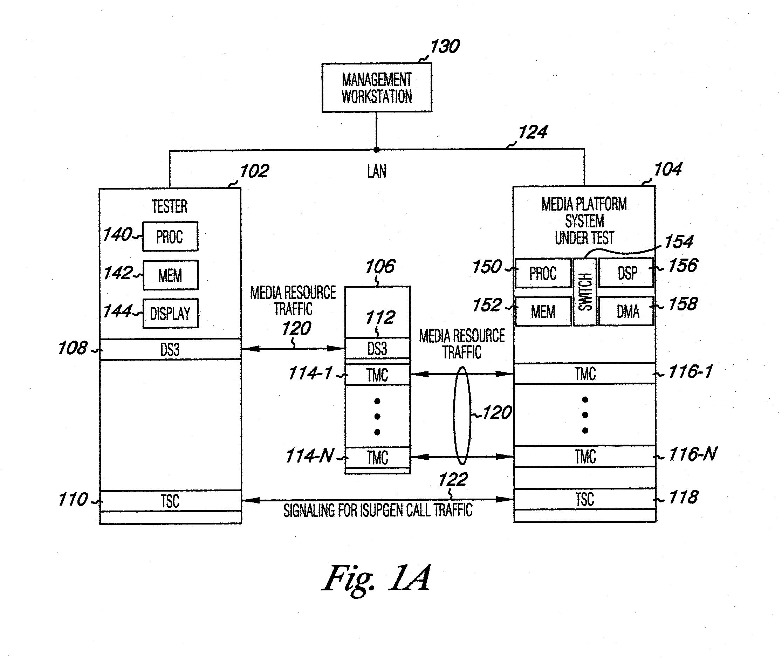

Figure 1A is a block diagram embodiment of a UNIX operating system based tester 102 coupled to a non-UNIX based media platform 104, or system under test (SUT). The embodiment of Figure 1A represents a tester 102 coupled to a standalone media platform 104. Often in the discussion which follows reference is made to UNIX testers and non-UNIX based media platforms. However, the same is provided for illustration purposes. Accordingly, testers and media platforms having other types of operating systems are considered within the scope of the embodiments of the present invention.

Media platforms, such as shown in Figure 1A, provision, that is, provide or supply, telecommunication services to users. For example, a media platform 104 can receive a call signal originated by a local exchange carrier (LEC) and propagate the call signal to a switch 154 in order to route the call to an intended destination such as, by way of example, a home, another LEC, or a particular telecommunication service (e.g., voicemail, toll-free 800 call routing, interactive voice response applications, dual tone multiple frequency services, as well as virtual private network call routing).

A call signal is one form of media data traffic that can be transmitted over a media channel on a media platform. A DS0 is one example of a media channel and represents one 64 Kilo bits per second (Kb/s) signaling channel. Media data traffic includes voice, data, video type signals, etc.

A switch 154, such as a switch in a publicly switched telephone network (PSTN), connects a call signal, or other media data traffic, on one media channel to another available media channel in order to continue routing the signal to the intended destination. A switch 154 can perform its function based on Signaling System 7 (SS7) control signals. SS7 is a well known dialogue-based communications protocol used for signaling and which may be used for communications with computing platforms such as a telecommunications media platform.

A media platform 104 includes hardware and software resources. Among these, the media platform can include a processor 150 and a memory 152. The memory 152 can store software (e.g., computer readable instructions and other programs) related to a variety of functions and telecommunication service applications executable on and by the media platform 104. The processor 150 can operate on computer executable instructions as part of the control logic for controlling operations of the media platform 104. Memory 152 can include non-volatile and volatile memory such as Flash memory, read only memory (ROM), random access memory (RAM), and optical memory, among others.

For illustration purposes, additional hardware and software resources are shown in Figure 1A and can include a digital signal processing (DSP) module 156 and a direct memory access (DMA) module 158. The DSP module 156 and DMA module 158 are used in connection with instructions from memory 152, executable on processor 150. The DSP module 156 and DMA 158 work in conjunction with the processor 150 and memory 152 resources to provision a call signal to a particular media channel, as may be available on a telecom media card (TMC) 116, in order to complete the call signal's routing to an intended destination. A telecom media card (TMC) includes individual media channels, and the type of TMC determines the data rate and framing format for signals on those media channels. As noted above, a DS0 is one example of a media channel and represents one 64 Kilo bits per second (Kb/s) channel. DS0s are the building blocks for TMCs. A DS3 type TMC is the equivalent of 672 DS0s and provides a signal rate of 45.736 Mega bits per second (Mb/s). Twenty four (24) DS0s are provided in each T1 trunk or span of a T1 type TMC for a signal rate of 1.544 Mb/s. One example of a T1 type TMC includes 4 trunks or spans for a total of 96 media channels on the T1 type TMC. In this example, 7 T1 type TMCs would provide 672 media channels equilavent to the number on one DS3 type TMC but having a different rate and framing format for signals on those media channels. Thirty one (31) DS0s are provided in each E1 trunk or span of an E1 type TMC for a signal rate of 2.048 Mb/s. One example of a E1 type TMC includes 4 trunks or spans for a total of 124 media channels on the E1 type TMC. A J1 trunk or span of a J1 type TMC is the Japanese specification equivalent to a T1 trunk or span of a TMC.

By way of example and not by way of limitation, the DSP module 156 can analyze call signals, for processing and routing, using various algorithms such a Fast Fourier Transform. The DMA module 158 includes circuitry to route data (e.g., call signals or other media data traffic) on the media platform, for example, from one memory to another, without using the processor 150 in every data transfer. As described in the introduction, the media platform includes programs created for use with the particular operating system type, e.g., Linux, resident on the media platform 104.

As shown in Figure 1A, the tester 102 also includes a processor 140 and a memory 142. Programs stored in the memory 142 and 152 are executable by the processors 140 and 150 to perform the embodiments described herein. According to various embodiments, a test routine, e.g., program, can be provided on the tester 102 and the media platform 104. A test routine is used to test a variety of operations on the media platform 104. For example, the test routine program is operable to drive call signals or play media files from the tester 102 to the media platform 104. A media file can include an audio recording such as a voice mail recording or other recorded audio message. The transmission of call signals and/or media files over media channels are examples of media data traffic on the media channel. A test routine program on the tester 102 can further receive call signals or recorded media files back from the media platform 104. In this manner, the tester 102 can test the performance of the hardware and software resources (e.g., processing capability, memory, and media channels, among others as listed above) of the media platform 104 to as the same would respond to actual telecommunication service applications available on the media platform 104. For example, playing a media file to a media platform can simulate the transmission of an audio message to be recorded as a voicemail message to a voicemail box on the media platform. The software on the media platform, e.g., resident in memory 152 and executable by processor 150, can include instructions to record the voice message or audio file to a particular location in memory 152, e.g., a subscriber's voicemail box. The software on the media platform can also receive call signals and interpret and execute the instructions encoded in the call signals, again using the memory and processor and other hardware such as the DSP module and DMA module described above, to play back a recorded voice message from a particular voicemail box to the tester. The testing routine software can compare the returned audio file, e.g., voicemail message, to the original voice message to ascertain the accuracy of the played back message. By exchanging calls signals and media files back and forth between the tester and the media platform and comparing the signals and audio files to original copies a test routine program can exercise the hardware and software on the media platform to test the media platform's performance. More detail and examples of this process are given below.

Examples of telecommunication service applications which can be tested on the media platform include voicemail, toll-free 800 call routing, interactive voice response applications (IVR), dual tone multiple frequency (DTMF) applications, as well as virtual private network call routing. IVR applications include applications which can process, e.g., using a DSP module, spoken voice signals and provide the call signal to a particular media channel 116 in order to complete the call signal's routing to an intended destination. DTMF services include applications which can process the type of audio signals that are generated from pressing buttons on a touch-tone telephone and provide the call signal to a particular media channel 116 in order to complete the call signal's routing to an intended destination.

In various embodiments, a test routine program includes control scripts and validation scripts. Control scripts are used to drive call signals or play media files. By way of example and not by way of limitation, control scripts can be used to generate DTMF signals or play a media file and validation scripts can be used to retrieve DTMF signals or recorded media files. The validation scripts can detect and measure whether the retrieved DTMF signals or recorded media files are being received as the correct tones in a correct sequence or if the recorded media file is being replayed correctly by comparing the signals and media files to original copies. The control and validation scripts are software which can be stored in memory 142 and 152 and executed by the processor 140 and 150 to place and/or retrieve signals on and from media channels. For example, software in memory 152 and executable by the processor 150 can retrieve a signal on a particular media channel on the TMC 116-1 and together with the associated hardware of the DSP module 156, DMA module 158, and/or switch 154 route the signal to an intended destination such as a voicemail box.

One of ordinary skill in the art will understand the manner in which executable instructions can generate and/or retrieve such signals. For example, control scripts and validation scripts can be written in a programming language such as Java scripts. However, embodiments are not limited to instructions written in a particular programming language. Validation scripts can receive signals, e.g., media data traffic from the media channels, whether the signals are call signals, DTMF tones, or media files played to the media platform 104 or back to the tester 102 and can compare those signals to recorded test copies. The software of a testing routine program records errors or inaccuracies when the received signals do not match the original test copies, e.g., the DTMF signals do not match the original tones and in a correct sequence as compared to the test copy or if a recorded media file replayed to the tester and/or media platform does match the content or audio quality of the original media file when compared to the same. Again, instructions executed with the above described hardware, e.g., DSP module 156, processors 140, 150 and the like are capable of performing this comparison and analysis. The mention of such comparison and analysis routines performed with hardware, software, firmware, or a combination thereof is made for illustration purposes and is not intended to obscure the embodiments of the invention.

As shown in Figure 1A, the tester 102 can further include a user interface 144 via which a user can interact with the tester 102. As one of ordinary skill in the art will appreciate the user interface 144 can include a graphical user interface (GUI) and a keyboard combination. The embodiment of Figure 1A further illustrates a management workstation 130 coupled via a local area network (LAN) between the tester 102 and the media platform 140 (system under test). The management workstation 130 can be used by an administrator of a test routine to monitor a test routine in progress, track the recorded errors, and to load test routine control scripts and validation scripts to the memory, 142 and 152, on the tester 102 and the media platform 104. Embodiments of the invention, however, are not so limited.

Embodiments of the invention include connecting a tester 102 which has a first type of operating system, e.g., a UNIX based tester, and has a first type of media channel bandwidth to a media platform 104. The media platform 104 has a second, different, type of operating system, e.g., a Linux operating system based media platform, and has a second type of media channel bandwidth. As such, different type of media channels can connect to one another and a test routine program can execute signals between the tester 102 and 104 to exercise the hardware and software of the media platform despite the differences between the tester and media platform 104. To achieve this, the control scripts and validation scripts which are part of the test routine on the tester 102 are copied to memory 152 of the media platform 104 where they can be executed by the processor 150 of the media platform 104 in response to test routine signals, e.g., DTMF signals, media files or other media data traffic of the like. In this manner, when the tester 102 executes control scripts to drive call signals or media files to the media platform 104 the validation scripts on the media platform 104 will be able to interpret the same in the manner intended despite the media platform 104 having a different type of operating system from the tester 102. Likewise, when the media platform 104 executes control scripts associated with the test routine to drive call signals or media files back to the tester 102 the validation scripts on the tester 102 will recognize the media platform's control script format and be able to interpret and operate on the returned signals and media files to compare the same to original test copies. Hence, even though the tester 102 and media platform may have a different operating systems the test routine from the tester 102 can exercise the hardware and software of the media platform 104. More discussion on executing a test routine is provided below.

As shown in the embodiment of Figure 1A, the tester 102 includes a telecom media card (TMC) 108 having a first rate and format, e.g., voice channel capacity and data framing rate, to channel media data traffic. The media platform 104, on the other hand, includes a number of TMCs 116-1 through 116-N, which have a second rate and format. The TMCs, 116-1 through 116-N, thus have a different voice channel capacity and data framing rate than the TMC 108 of the tester 102. The designation "N" is used to indicated a different number of TMCs on the media platform 104 from that of the tester 102. By way of example and not by way of limitation, TMC 108 in the tester 102 includes a DS3 TMC, as the same has been described above. Likewise, by way of example and not by way of limitation, the TMCs 116-1 through 116-N in the media platform 104 (e.g., system under test) are T1, E1, and/or J1 TMCs as the same have been described above.

In this example since a DS3 type TMC provides 672 DS0s, or media channels, the tester 102 can potentially connect to at least 672 DS0s, or media channels, in a media platform 104. Thus, for example, if the number of TMCs 116-1 through 116-N in the media platform 102 are T1 type TMCs, up to seven T1 type TMCs could be provided on the media platform 104 to fully connect all of the media channels between the tester 102 and the media platform 104 in a one to one relationship (e.g., 7 T1 type TMCs each having four spans with 24 channels for 96 media channels per TMC equals 672 total media channels on the media platform). However, to continue the example, if the number of TMCs 116-1 through 116-N in the media platform are E1 type TMCs, fewer than six E1 type TMCs could be provided on the media platform 104 and still obtain an available media channel on the tester 102 if all media channels on the media platform were attempting to connect to the tester 102 (e.g., 6 E1 type TMCs each having four spans with 31 channels for 124 media channels per TMC would equal 744 total media channels on the media platform 104). These examples are provided for illustration purposes and embodiments of the invention are not intended to be limited by this illustration.

Embodiments of the present invention provide a capability for a tester TMC having a data rate and framing format different from the data rate and framing format of TMCs on a media platform 104, e.g., system under test, to be connected such that a test routine of the hardware and software on the media platform can be conducted.

As shown in the embodiment of Figure 1A, this capability is achieved by coupling the tester TMC 108 to the media platform TMCs 116-1 through 116-N, whether T1, E1, and/or J1 type TMCs, through a multiplexer 106. The multiplexer 106 has a first side 112 that can couple to the TMC 108 of the tester 102 and has a second side, shown as 114-1 through 114-N, that can couple to the number of TMCs, 116-1 through 116-N, in the media platform 104. The multiplexer 106 can take multiple signals and multiplex them into one signal on a single conductor, e.g. such as a single conductor to a DS3 type TMC, and can demultiplex them from one signal on a single conductor to multiple signals on multiple conductors, e.g., such as to 4 separate conductors, one to each span of a T 1 type TMC. Thus, for example, the multiplexer 106 can demultiplex the 672 different possible media channel signals from a single DS3 connection of the DS3 type TMC 108 of the tester 102 and distribute those media channel signals to, for example, various T1 trunks associated with a T1 type TMC on the media platform 104. Again, each conductor to a T1 trunk is capable of carrying 24 different media channel signals on a single conductor. Conversely, the multiplexer 106 can multiplex the 96 media channel signals received on 4 single conductor T1 trunks of a T1 type TMC from the media platform 104 (24 channels per trunk/4 trunks per T1 type TMC) to the single DS3 conductor associated with the DS3 type TMC 108 on the tester 102 to connect media channels to and from the tester 102 and the media platform 104.

Thus, as one example a tester 102 having a DS3 type TMC 108 can connect to a media platform 104 having multiple T1 type TMCs, E1 type TMCs, and/or J1 type TMCs, e.g., 116-1 through 116-N. A multiplexer 106 typically includes a set of built in software instructions to perform the multiplexing. However, according to embodiments of the present invention, the multiplexer 106 may be loaded with software and/or firmware from a user to establish which type of different rate and framing format media channels will be connecting through the multiplexer 106, e.g., DS3 to T1, DS3 to E1, DS3 to J1, etc.

In the embodiment of Figure 1A, the media platform tester 102 is illustrated as one computing platform, or host system. Likewise, the media platform 104 is illustrated as one computing platform, or host system. As one computing platform, or host system, the software on the tester 102 will handle both a set of Front End (FE) operations and a set of Back End (BE) operations. Similarly, as another independent computing platform, or host system, the media platform 104 will handle both its FE and BE operations. The Front End operations include setting up and tearing down a connection between two media channels through the use of telecom signaling card (TSC), e.g., TSC 110 in the tester 102 and TSC 118 in the media platform 102. The Back End operations include the control and interface of hardware, e.g., processor 140 and/or 150, the DMA module 158, the DSP module 156, etc., and software instructions, e.g., from memory 142 and/or 152, to direct and operate on the media data traffic on the media channels, e.g., such as those in the telecom media cards TMC 108 in the tester 102 and example TMCs 116-1 through 116-N in the media platform 104.

As shown in the embodiment of Figure 1A, the FE of the tester 102 is coupled to the FE of the media platform 104, e.g., TSC 110 in the tester 102 is coupled to the TSC 118 in the media platform 104. The FE of the tester 102 using TSC 110 can signal the TSC 118 in the media platform 104 that a media channel in the TMC 108 of the tester 102 is looking for a media channel in TMC 116-1 through 116-N of the media platform 104 to which it can connect. The reverse is true as well. That is, the FE of the media platform 104 using TSC 118 can signal the TSC 110 in the tester 102 that a media channel in TMC 116-1 through 116-N of the media platform 104 is looking for a media channel in TMC 108 of the tester 102 to which it can connect. To achieve this, the TSCs, 110 and 118, couple signaling and control for integrated services user part (ISUP) call traffic between one another, e.g., SS7 signaling call traffic.

As one of ordinary skill in the art will appreciate, a tester 102 typically uses highly specialized SS7 call control and data communication processing software (referred to as IsupGEN) that simulates, as close as possible, the real switch operation, e.g., switch 154, of a media platform in a publicly switched telephone network (PSTN) or LEC.

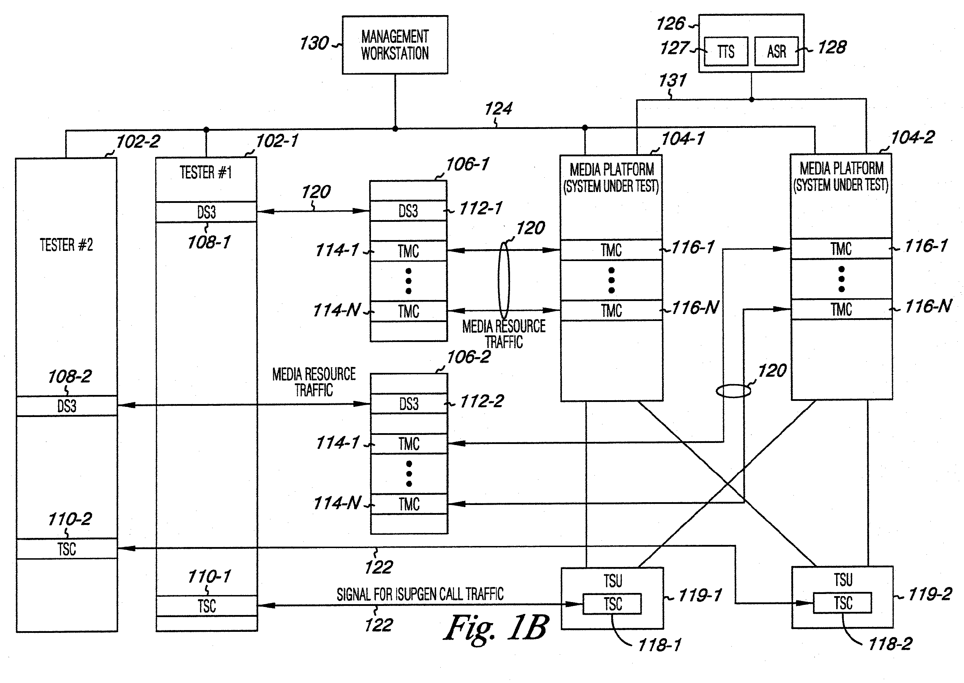

Figure 1B illustrates a block diagram embodiment of multiple UNIX operating system based testers, e.g., 102-1 and 102-2, coupled to multiple non-UNIX based media platforms, or systems under test (SUT), e.g., 104-1 and 104-2. Media platform testers 102-1 and 102-2 include the capability and configuration of tester 102 described in connection with Figure 1A. Likewise, the media platforms 104-1 and 104-2 include the capability and configuration of media platform 104 described in connection with Figure 1A.

Figure 1B illustrates a block diagram embodiment of multiple media platform testers coupled to a multiple media platform configuration. The configuration shown in Figure 1B illustrates a configuration for testing high redundancy (also referred to as high availability) media platform configurations. The high redundancy is provided in Figure 1B by virtue of there being duplicates of all components. Thus, twice as many media channels are provided as were shown in the embodiment of Figure 1A. In the example of Figure 1B, each of the media platforms 104-1 and 104-2 are still considered independent computing platforms, or host systems, and can handle both the Front End (FE) operations of its associated TSC, 118-1 and 118-2 respectively, and the Back End (BE) operations of media data traffic in the media channels of the TMCs, e.g.,116-1,. .., 116-N. To provide the duplicity of available media channels, however, the FE TSCs, 118-1 and 118-2, are separated out into separate telecom signaling units (TSUs), 119-1 and 119-2, respectively. In this manner, the TSUs can be cross connected to each platform. As shown in Figure 1B, TSU 119-1 is coupled to both media platforms 104-1 and 104-2 and TSU 119-2 is coupled to both media platforms 104-1 and 104-2. Thus, when an ISUP signal is received by either TSU 119-1 or 119-2, e.g., to set up or tear down a call, the TSCs 118-1 and 118-2 therein can have access to media channels in the TMCs, 116-1, ..., 116-N of both media platforms, 104-1 and 104-2. Again, the designation "N" is used to indicate a different number of TMCs on the media platforms 104-1 and 104-2 from that of the testers 102-1 and 102-2.

The embodiment of Figure 1B also introduces the fact that the media platforms, 104-1 and 104-2, can be coupled via a LAN 131 or other network connection to additional computing platforms. For example, the embodiment of Figure 1B illustrates the media platforms, 104-1 and 104-2, coupled via a LAN 131 to an application server 126 having text to speech (TTS) 127 and automatic speech recognition (ASR) 128 program modules. Such additional computing platforms can be coupled to the media platforms 104-1 and 104-2 under test to perform a range of additional hardware and software capabilities of the media platforms 104-1 and 104-2, e.g., the systems under test.

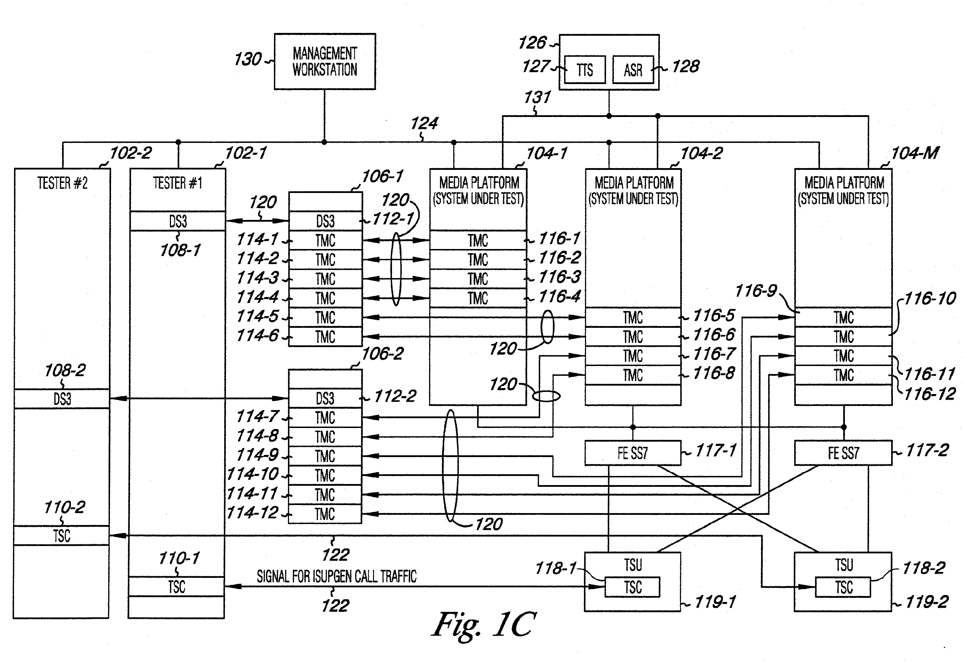

Figure 1C illustrates a block diagram embodiment of multiple media platform testers coupled to multiple media platforms. In the embodiment of Figure 1C, two testers are shown connected with "M" media platforms. The designation "M" is used to indicate a number of media platforms different from the number of testers. The designator "M" can be different from the designator "N" used in other parts of the present application. The embodiment of Figure 1C is considered a clustered or distributed configuration because unlike Figures 1A and 1B, a separate computing platform, or host systems, is dedicated to handling the Front End (FE) operations for signals coming from each tester 102-1 and 102-2 in a one-to-one relationship. Thus in the embodiment of Figure 1C, since two testers 102-1 and 102-2 are illustrated two separate FE computing platforms 117-1 and 117-2 are used to handle the set up and tear down signaling, one for each tester, regardless of how many BEs are clustered together. Again, in the embodiment of Figure 1C, two testers are shown connected with "M" media platform BEs. The two separate FE computing platforms 117-1 and 117-2 are illustrated coupled to the "M" clustered media platform BEs. The same can be coupled via a local area network as the same has been described before for coupling the testers and media platforms in Figures 1A and 1B.

An ISUP signal coming from one tester, e.g., tester 102-1 will be received by an associated TSU 119-1 having a TSC, 118-1 and then handed off to one or both of the two separate FE computing platforms 117-1 and 117-2 to set up and tear down calls to available media channels in the "M" media platforms. Likewise an ISUP signal coming from one tester, e.g., tester 102-2 will be received by an associated TSU 119-2 having a TSC, 118-2 and then handed off to one or both of the two separate FE computing platforms 117-1 and 117-2. As was the case with the embodiment of Figure 1B, the separate FE computing platforms 117-1 and 117-2 are cross coupled to each of the TSUs 119-1 and 119-2 such that the TSCs 118-1 and 118-2 therein can have access to FE computing platforms 117-1 and 117-2 which serve the "M" media platforms.

In the example of Figure 1C, two testers 102-1 and 102-2 are illustrated having DS3 type TMCs. Thus each tester 102-1 and 102-2 has 672 media channels available. In the example, the M=3 media platforms are shown. If the TMCs in the media platforms are T1 type TMCs then up to 14 T1 type TMCs could connect to the 1344 media channels available on the two testers 102-1 and 102-2 (e.g., 14 T1 type TMCs each having four spans with 24 channels for 96 media channels per TMC equals 1344 total media channels on the media platforms). More than 14 T1 type TMCs would require more than the two multiplexers shown, e.g., multiplexers having a first side connected to 672 channels of a DS3 type TMC and a second side coupled to 672 channels having a different data rate and framing format.

By way of illustration and not by way of limitation 12 T1 type TMCs are spread equally across the M=3 media platforms. That is 4 T1 type TMCs are illustrated in each of the M=3 media platforms. Thus, the designator "N" in Figures 1A and 1B would be N=4. Embodiments are not limited to this example and the TMCs do not have to be distributed evenly across the media platforms, e.g., systems under test. In this example, six second sides 114-1 to 114-6 and 114-7 to 114-12 are illustrated with each multiplexer 106-1 and 106-2. As illustrated by this example, 12 T1 type TMCs including 1152 T1 type media channels (e.g., 96 media channels per T1 type TMC x 12 T1 type TMCs = 1152) can be placed under test by the two testers 102-1 and 102-2.

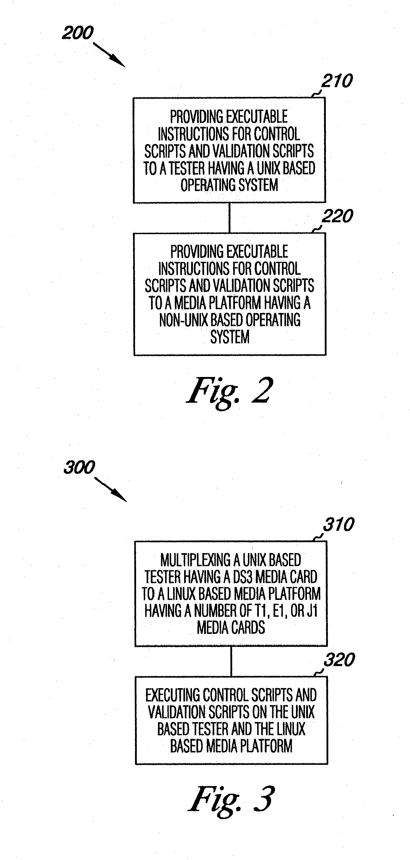

Figures 2-4 further illustrate various methods embodiments for testing a media platform. Unless explicitly stated, the method embodiments described herein are not constrained to a particular order or sequence. Additionally, some of the described method embodiments or elements thereof can occur or be performed at the same point in time. The embodiments can be performed by software programs (e.g., computer executable instructions), hardware, application modules, and the like, executable on the systems and devices shown herein or otherwise. Embodiments of the invention, however, are not limited to software written in a particular programming language. And, software, application modules and/or computer executable instructions, suitable for carrying out embodiments of the present invention, can be resident in one or more devices or locations or in many locations.

Figure 2 is a block diagram illustrating a method embodiment for testing a media platform having a different type of operating system and different rate and framing format TMCs from the operating system type and TMC type of the media platform tester. In the embodiment of Figure 2, one method includes providing executable instructions for a test routine, including control scripts and validation scripts, to a tester having a UNIX based operating system in block 210. As described above, the test routine having the control scripts and validation scripts is loaded to the memory, e.g., 142, of the tester. The control scripts can be retrieved from memory 142 and executed by the processor 140 to generate call signals, as the same are known in testing routines, and/or to play media files such as audio media files from memory. By way of example and not by way of limitation, control scripts can be used to generate DTMF signals or play a media file and used in conjunction with the test routine software to place these signals on the media channels, e.g., within a TMC 108, of the tester. Likewise, by way of example and not by way of limitation, the validation scripts are used in conjunction with test routine software to retrieve DTMF signals or recorded media files from the media channels. The validation scripts can detect and measure whether the retrieved DTMF signals or recorded media files are being received as the correct tones in a correct sequence or if the recorded media file is being replayed correctly by comparing the signals and media files to original copies, e.g., original copies stored in the memory 142 of the tester 102 in Figure 1A. The comparison can be performed by DSP modules, using Fast Fourier transform techniques and program routines of the like, as the same will be known and understood by one of ordinary skill in the art.

As described above, the tester can include a first type TMC and be connected to a media platform having a second type TMC, e.g., includes a T1, E1, and/or J1 type TMC. The tester, having a different rate and framing format TMC from the TMC type on the media platform, is coupled to the media platform through a multiplexer having programs to multiplex and demultiplex media channels between the two different types of TMCs.

As shown in block 220, the method further includes providing executable instructions for control scripts and validation scripts to a media platform having a non-UNIX based operating system. For example, in one embodiment the media platform can include a Linux based operating systems. Embodiments, however, are not so limited to these examples. The control scripts and validation scripts are loaded to memory 152 of the media platform so that signals received from the testing routine program on the tester will be recognized and executable by the processor 150 on the media platform, e.g., 104 in Figure 1A, having a different type of operating system from the tester. As described above, the control scripts and validation scripts can be loaded to respective memories in the media platform and the tester via computer disk or from a management workstation coupled to the media platform and the tester over a network connection such as a LAN.

The control and validation scripts are software which can be stored in memory 142 and 152 and executed by the processor 140 and 150 of Figures 1A, for example, to place and/or retrieve signals on and from media channels. Software in memory 152 and executable by the processor 150 of the media platform 104 shown in Figures 1A-1C can retrieve a signal on a particular media channel on the, e.g., TMC 116-1 of Figure 1A, and together with the associated hardware of the DSP module 156, DMA module 158, and/or switch 154 route the signal to an intended destination such as a voicemail box. One of ordinary skill in the art will understand the manner in which executable instructions can generate and/or retrieve such signals as part of a testing routine.

For example, control scripts can retrieve instructions from memory which when processed by a tone generator produce electronic signals representing various call tones. Similarly, the control scripts can retrieve instructions from memory which when executed by the processor play audio files and place electronic signals representing the audio data onto media channels. These operations are generally known by one of ordinary skill in the art and are mentioned here for purpose of illustration. Again, control scripts and validation scripts can be written in a programming language such as Java scripts. However, embodiments are not limited to instructions written in a particular programming language.

Validation scripts, by way of example and not by way of limitation, can receive signals, e.g., media data traffic from the media channels, whether the signals are call signals, DTMF tones, or media files played to the media platform or back to the tester and can compare those signals, using the testing routine software and associated hardware of the DSP module 156, DMA module 158 to recorded test copies as stored in memory 152. The software of a testing routine program records errors or inaccuracies when the received signals do not match the original test copies, e.g., the DTMF signals do not match the original tones in a correct sequence as compared to the test copy or if a recorded media file replayed to the tester and/or media platform does match the content or audio quality of the original media file when compared to the same. One of ordinary skill in the art will appreciate how a testing routine can record errors, such as by using counters in the form of registers, firmware, software, hardware, or a combination thereof. Embodiments of the invention are not limited to these examples.

Again, instructions executed with the above described hardware, e.g., DSP module 156, processors 140, 150, and the like are capable of performing this comparison and analysis. The mention of such comparison and analysis routines as performed with hardware, software, firmware, or a combination thereof is for illustration purposes.

By providing the control scripts and validation scripts to both the media platform and the tester the tester and media platform can exchange and execute a testing routine program despite having different operating system types. Thus, by way of example and not by way of limitation, programs for media platform testing routines can be executed between the tester having UNIX based operating system and a media platform having a different type of operating system, e.g., a Linux based operating system.

Figure 3 is a block diagram illustrating another method embodiment for testing a media platform having a different type of operating system and a different rate and framing format TMCs from the operating system type and TMC type of the tester. In the embodiment of Figure 3, one method includes multiplexing a UNIX based tester having a first type media card, e.g., DS3 type TMC, to a Linux based media platform having a number of second type media cards, e.g., T1 type TMCs, E1 type TMCs, or J1 type TMCs, at block 310. At block 320, the method includes executing control scripts and validation scripts on the media platform having a different type of operating system from the operating system type of the tester.

Testing a media platform having a different rate and framing format TMC from the TMC type of the tester is achieved by use of a multiplexer, e.g., multiplexer 106 in Figure 1A. As described above, the multiplexer 106 includes a first side 112 that can couple to a data rate and framing format of the tester TMC and includes a second side that can couple to the different data rate and framing format of the media platform TMCs. For example, the multiplexer can take multiple signals and multiplex them into one signal on a single conductor, e.g., such as a single conductor to a DS3 type TMC on a tester, and can demultiplex them from one signal on a single conductor to multiple signals on multiple conductors, e.g., such as to 4 separate conductors, one to each span of a T1 type TMC on a media platform. Thus, in this example, the multiplexer can demultiplex the 672 different possible media channel signals from a single DS3 connection of the DS3 type TMC and distribute those media channel signals to various T1 trunks associated with a T1 type TMC. Conversely, the multiplexer can multiplex the 96 media channel signals received on 4 single conductor T1 trunks of a T1 type TMC to the single DS3 conductor associated with the DS3 type TMC to connect media channels to and from a tester and a media platform 104. Control scripts and validation scripts for a testing routine program can be copied to memory on both the tester and media platform, in the manner described in connection with Figure 2, such that the signals exchanged on the multiplexed media channels can execute on both devices despite having different operating systems.

As noted above, the multiplexer generally includes built-in software instruction sets to perform the multiplexing. However, according to embodiments herein, the multiplexer may also loaded with software and/or firmware from a user, either from a computer disk, network, or otherwise, to establish which different type of data rate and framing format media channels will be connecting through the multiplexer, e.g., DS3 to T1, DS3 to E1, DS3 to J1, etc.

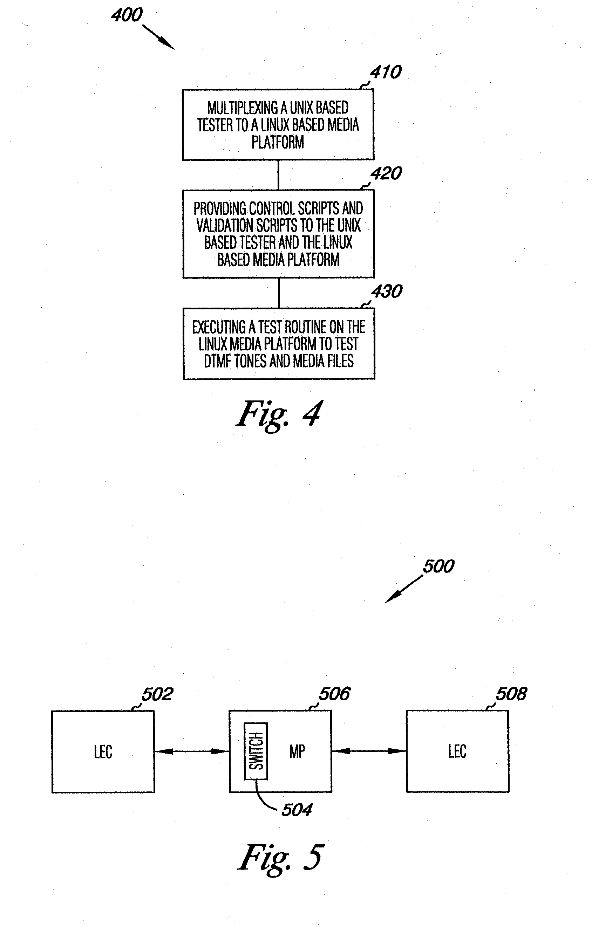

Figure 4 is a block diagram illustrating another method embodiment for testing a media platform having a different type of operating system and different rate and framing format TMCs from the operating system type and TMC type of the media platform tester. In the embodiment of Figure 4, one method includes multiplexing a UNIX based tester to a Linux based media platform at block 410. The method of multiplexing can include that explained in connection with Figure 3 as well as in connection with Figures 1A-1C. At block 420 the method includes providing control scripts and validation scripts to the UNIX based tester and the Linux based media platform. Providing control scripts and validation scripts to the UNIX based tester and the Linux based media platform can be performed as the same has been described in connection with Figure 2 as well as in Figures 1A-1C. The control scripts and the validation scripts are provided to both the UNIX based tester and the Linux based media platform so that a media platform testing routine using those control scripts and validation scripts can execute between the tester and media platform despite their different operating systems.

In block 430 the method includes executing a test routine on the Linux based media platform to test DTMF tones and media files, as the same have been described above, across the media channels of the Linux based media platform. In this manner a media platform testing routine can be run from a legacy type tester, e.g., a tester having a UNIX based operating system and DS3 type TMC to test the performance of the hardware, such as media channels, and the software of a media platform having a different type of operating system and/or different rate and framing format TMCs from that of the tester.

The following provides an example of executing a test routine program to test DTMF tones and media files on a media platform having a different type of operating system and different rate and framing format TMCs from the operating system type and TMC type of the media platform tester. The tester and media platform are multiplexed as described in Figure 3 and above and the control and validation scripts have been copied to both the tester and the media platform as described above.

By way of example, a testing routine program is launched from memory in the tester. The testing routine includes control scripts can retrieve additional instructions from memory which when processed may be used to generate a sequence of DTMF tones by a tone generator. As one of ordinary skill in the art will appreciate, a tone generator can produce various call tones encoded as electronic signals. The testing routine instructions operate in conjunction with hardware to place the electronic signals on a media channel of the tester, for example, on one of the 672 media channels available on a DS3 type TMC. As explained above, a TSC of the tester exchanges ISUP signals with a TSC of a media platform, e.g., the system under test. This exchange negotiates and/or identifies an available media channel on the media platform to which the media channel from the tester can connect in order to route the incoming signals to an intended destination. For example, the exchange between the TSCs on the tester and media platform may identify that the call signal or other media data traffic on a particular media channel from the tester is intended to be routed to a particular subscriber's voice mailbox.

As the DTMF signal is received on the media channel of the media platform, a voicemail telecommunication service application or program, such as be contained in the memory of the media platform, executes and operates on the received call signal. The voicemail program can process the DTMF tones, e.g., using a DSP module, processor and/or other associated hardware to connect the call signal to a switch for further routing or can identify that the subscriber's voice mailbox is resident in a memory location on the memory of the media platform.

In one scenario with DTMF tones, the test routine can include instructions to store the DTMF tones to a location in memory and then, upon further instruction from the media platform, then control scripts on the media platform can retrieve the tones and play them back over a media channel to the tester. In this scenario, validation scripts on the tester would be used to retrieve an original copy of the sequence and listing of tones that were sent from the tester to the media platform. A comparison could then be made to the original copy to ascertain whether the tones have been accurately returned. Again, such comparison routines as part of a test routine are known and understood by those of ordinary skill in the art. The testing routine can record errors when incorrect tones or tones in an incorrect sequence are returned. This process is known in the art of testing routine programs.

In another scenario with DTMF tones, the processed DTMF tones can launch a voice mail recording to be played back to the tester over the media channel. The testing routine can similarly compare the received voice mail recording to an authenticated copy to measure a quality of the returned voice mail recording and/or whether any recorded audio data has been lost. Again, such measurement and comparison techniques are known in the art of testing routine programs.

In yet another example, control scripts on the tester retrieve additional instructions from memory which when processed may be used to retrieve a media file from memory. As noted earlier, the media file can include a recorded audio file. The control scripts can execute to cause such an audio file to be placed on a media channel as encoded electronic signals. The testing routine instructions operate in conjunction with hardware to place such electronic signals representing the audio file on a media channel of the tester, for example, on one of the 672 media channels available on a DS3 type TMC.

Once again, the TSC of the tester exchanges ISUP signals with a TSC of a media platform, e.g., the system under test. This exchange negotiates and/or identifies an available media channel on the media platform to which the media channel from the tester can connect in order to route the audio file to an intended destination. For example, the exchange between the TSCs on the tester and media platform may connect the media channel of the tester to a media channel on the media platform which is connected to a particular DMA module for routing the audio file to a particular subscriber's voice mailbox.

As part of the test routine, additional instruction can be sent to the media platform which when processed execute to retrieve the audio file from the memory location and replay the audio file back to the tester as electronic signals over a media channel. As before, validation scripts on the tester can receive the replayed audio file and compare the audio file to a true copy in order to measure a quality of the returned audio file and/or whether any recorded audio data has been lost. Again, such measurement and comparison techniques are known in the art of testing routine programs. The above are examples of how a testing routine program can exercise the hardware and software of a media platform.

Embodiments have thus been illustrated for connecting a tester which has a first type of operating system, for example, a UNIX based tester, and that has a first type of media channel bandwidth to a media platform that has a second, different type of operating system, for example, a Linux based media platform, and that has a second type of media channel bandwidth in a manner such that different type of media channels can connect to one another and a test routine program can execute signals between the tester and the media platform to exercise the hardware and software of the media platform despite the differences between the tester and media platform.

Figure 5 is a block diagram embodiment of a telecommunications network 500 which may include enhanced service applications for a telecommunications user. A telephone call may be placed by various telecommunication enabled devices, such as cell phones, multifunction devices (PDAs), and the like, which are to connect to a network 500. The network may include one or more of a variety of serving networks, including but not limited to, Publicly Switched Telephone Networks (PSTNs) Global System for Mobile communications (GSM) networks, American National Standards Institute (ANSI) networks, Public Wireless Local Area Networks (PWLANs), and/or Internet Protocol (IP) networks to name a few.

For purposes of illustration, a telephone call may be described as originating with a local exchange carrier ("LEC") network 502. The LEC propagates the call to a switch 504, such as an originating switch or a terminating switch which can reside on a telecommunications platform, or media platform 506. The originating switch processes the telephone call and routes the call to its destination 508. The destination may be in a different LEC, a call bank, or in a different type of telecommunications network, such as those mentioned above.

The media platform 506 can include a non-UNIX based media platform, e.g., Linux operating system based media platform, which has had test and validation routines performed on its voice circuits using a UNIX tester as the same have been described herein. The media platform 506 can used as a proprietary telecommunications platform in a proprietary network. However, the media platform 506 can also be used as a private branch exchange (PBX), a switching center such as a mobile switching center (MSC), or a local exchange office, among others. As noted above, media platforms include hardware and software resources in the form of switches, routers, processors, digital signal processing (DSP) modules, memory, media cards, and the like which can operate on or according to computer executable instructions.

For example, the originating switch 504 may determine when processing for enhanced services is required for a telephone call. When processing for enhanced services is required, the originating switch opens a dialogue with the media platform, exchanging with the media platform 506 higher-level protocol messages embedded within lower-level SS7 protocol messages.

Signaling System 7 ("SS7") is a well known dialogue-based communications protocol used for signaling and which may be used for communications with computing platforms such as a telecommunications media platform. The data exchanged using the SS7 protocol couple between an originating switch and a media platform is commonly formatted into intelligent network application protocol ("INAP") messages. At the end of the exchange of INAP messages that comprises a dialogue between an originating switch 504 and a media platform 506, the media platform 506 directs the originating switch to connect the telephone call to a final destination 508 in order to facilitate the transfer of a media stream, e.g., voice, data, and/or video, etc.

Although specific embodiments have been illustrated and described herein, those of ordinary skill in the art will appreciate that an arrangement calculated to achieve the same techniques can be substituted for the specific embodiments shown. This disclosure is intended to cover adaptations or variations of various embodiments of the invention. It is to be understood that the above description has been made in an illustrative fashion, and not a restrictive one. Combination of the above embodiments, and other embodiments not specifically described herein will be apparent to those of skill in the art upon reviewing the above description. The scope of the various embodiments of the invention includes other applications in which the above structures and methods are used. Therefore, the scope of various embodiments of the invention should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A media platform configuration, comprising:
a tester, wherein the tester includes:
a tester telecom media card (TMC) with media channels having a first rate and format; and
a telecom signaling card (TSC) to set up and tear down connections with a media channel in the tester TMC;
a multiplexer having a first side coupled to the tester TMC and a second side coupled to a media platform TMC with media channels having a second rate and format; and
a program executable on the tester to test the media platform TMC.

2. The configuration of claim 1, wherein the program includes control scripts and validation scripts as part of a test routine, wherein the program can generate dual tone multiple frequency (DTMF) tones and play media files to the media platform TMC through the multiplexer using the control scripts, and wherein the program can retrieve DTMF tones and recorded media files on the tester TMC through the multiplexer using the validation scripts.

3. The configuration of claim 2, wherein the program is also loaded on the media platform, wherein the program can generate dual tone multiple frequency (DTMF) tones and play media files to the tester TMC using the control scripts, and wherein the program can retrieve DTMF tones and retrieve recorded media files on the media platform TMC using the validation scripts.

4. The configuration of claim 1, wherein the tester has a UNIX based operating system, the media platform has a non-UNIX based operating system, and wherein the tester TMC has a different media channel capacity than the media platform TMC.

5. The configuration of claim 4, wherein the tester TMC includes a DS3 type TMC.

6. The configuration of claim 5, wherein the media platform TMC includes a T1 type TMC.

7. The configuration of claim 5, wherein the media platform TMC includes a E1 type TMC.

8. The configuration of claim 5, wherein the media platform TMC includes a J1 type TMC.

9. The configuration of claim 1, wherein the configuration is part of a testing system, including:
at least two testers; and
wherein the at least two testers are coupled to two or more media platforms through two or more of the multiplexer.

10. The testing system of claim 9, wherein the media platforms are coupled via a local area network to an application server having text to speech (TTS) and automatic speech recognition (ASR) program modules.

11. The testing system of claim 9, wherein the media platforms and the testers are coupled via a local area network to a management workstation.

12. The testing system of claim 9, wherein the media platforms are cross connected to the testers.

13. A media platform testing system, comprising:
a UNIX operating system based tester, wherein the tester includes:
a first type of telecom media card (TMC); and
a telecom signaling card (TSC) to set up and tear down connections with a media channel in the first type of TMC;
a non-UNIX operating system based media platform, wherein the media platform includes:
a second type of TMC; and
a TSC to set up and tear down connections with a media channel in the second type of TMC; and
a multiplexer to multiplex and demuliplex signals between the first type of TMC and the second type of TMC.

14. The tester of claim 13, wherein the first type of TMC includes media channels having a DS3 data rate and framing.

15. The tester of claim 13, wherein the second type of TMC includes media channels having a T1 data rate and framing.

16. The tester of claim 13, wherein the non-UNIX operating system based media platform includes at least seven T1 type TMCs, each T1 type TMC having 96 media channels, the tester has a DS3 type TMC having 672 media channels, and wherein each DS3 type media channel is associated with one of the T1 type media channels.

17. The tester of claim 13, wherein the non-UNIX operating system based media platform includes a Linux based media platform.

18. A media platform testing system, comprising:
a tester, wherein the tester includes:
a first type telecom media card (TMC) with media channels having a first rate and format; and
a telecom signaling card (TSC) to set up and tear down connections with a media channel in the tester TMC;
a media platform, wherein the media platform includes:
a second type TMC with media channels having a second rate and format;
a telecom signaling card (TSC) to set up and tear down connections with a media channel in the media platform TMC; and
means for executing a test routine on the tester to test media channels on the second type TMC.

19. The tester of claim 18, wherein the first type TMC includes a DS3 type TMC and the second type TMC includes a T1 type TMC.

20. The tester of claim 19, wherein the means includes a multiplexer to multiplex and demuliplex media data traffic between media channels for the DS3 type TMC and media channels for the T1 type TMC.

21. The tester of claim 20, wherein the means includes a program having control scripts and validation scripts for a test routine executable on the tester, wherein the program can generate dual tone multiple frequency (DTMF) tones and play media files to the media platform through the multiplexer using the control scripts, and wherein the program can retrieve DTMF tones and recorded media files on the tester through the multiplexer using the validation scripts.

22. The tester of claim 21, wherein the media platform has an operating system different from the operating system of the tester, and wherein program is loaded from a computer readable medium to the media platform such that the media platform can respond to the DTMF tones and media files, including:
retrieving DTMF tones from the tester;
generating reply DTMF tones to the tester;
receiving media files from the tester and recording the received memory files to an appropriate memory location;
retrieving recorded media files; and
replaying media files back to the tester.

23. A method for testing a media platform, comprising:
providing executable instructions for control scripts and validation scripts to a tester having a UNIX based operating system;
providing executable instructions for control scripts and validation scripts to a media platform having a non-UNIX based operating system; and
executing a media platform test routine between the tester and the media platform based on the control scripts and the validation scripts.

24. The method of claim 23, wherein the method includes loading the same control scripts and validation scripts from a computer readable medium to both the tester and the media platform.

25. The method of claim 23, wherein executing the test routine includes driving call signals from media channels of the tester to media channels of the media platform.

26. The method of claim 25, wherein executing the test routine includes retrieving reply signals from media channels of the media platform on media channels of the tester.

27. The method of claim 23, further including multiplexing media channels of one type on the tester to media channels of a different type on the media platform.

28. A method for testing a media platform, comprising:
multiplexing media channels of a tester having a DS3 type media card to media channels of a media platform having a media card of a different type; and
performing a media platform test routine between the tester and the media platform by executing control scripts and validation scripts on the tester and the media platform.

29. The method of claim 28, wherein performing the test routine includes playing a media file from the tester to the media platform and recording the media file on the media platform.

30. The method of claim 28, wherein performing the test routine includes playing a recorded file from the media platform to the tester and comparing the media file received by the tester to a correct copy of the media file.

31. The method of claim 28, wherein the media card type of the media platform is selected from the group of:
a T1 media card;
a E1 media card; and
a J1 media card.

32. The method of claim 28, wherein the tester includes a UNIX based operating system and the media platform includes a non-UNIX based media platform.

33. A computer readable medium having a program to cause a device to perform a method, comprising:
multiplexing a UNIX based tester to a Linux based media platform;
executing control scripts and validation scripts on the UNIX based tester and the Linux based media platform; and
performing a test routine between the UNIX based tester and the Linux media platform.

34. The medium of claim 33, further including multiplexing media channels of a DS3 media card on the UNIX based tester with media channels of a T1 media card on the Linux based media platform.
